# EUROPEAN PATENT APPLICATION

(11) **EP 3 064 479 A1**
(43) Date of publication of application: **07.09.2016**
(21) Application number: 15157526.3
(22) Date of filing: 04.03.2015
(51) Int. Cl.: C03C 17/36

(54) **Temporary surface protective adhesive layer**

(71) Applicant: AGC Glass Europe, 1348 Louvain-la-Neuve (BE)
(72) Inventor: Michel, Eric, 4000 Glain (BE); Tixhon, Eric, 4367 Crisnée (BE); Mahieu, Stijn, 9920 Lovendegem (BE)
(74) Representative: Larangé, Françoise

(57) **Abstract**

The present invention relates to a temporary protective polymer based layer which may be adhered to a substrate of large dimension to protect it during e.g. transport, cutting, washing and handling prior to its final use. Said film for temporary surface protection is preferably coextruded and substantially free of acrylic based material.

## Description

This invention in certain example instances relates to a method of making a coated glass article. In certain example instances, a temporary protective polymer based layer is adhered to a coated glass substrate to protect the low-E coating thereof during transport, cutting, edge seaming, washing and handling prior to an optional heat treatment (e.g., thermal tempering) and prior its use in a final product (e.g., a window unit). Typically, the temporary protective layer is easily removed by peeling it off prior to the optional heat treatment or its final use.

### BACKGROUND OF THE INVENTION

It is known in the art to use coated articles in the context of window units such as insulating glass (IG) window units. For example, a solar management coating (e.g., low-E coating) may be provided on the inner surface of one of the glass substrates of an IG window unit so as to protect a building interior against infrared (IR) radiation and the heat generated thereby. Coated glass substrates of IG units often have to be heat treated (e.g., tempered), prior to IG unit assembly, to meet certain code requirements.

During the conventional manufacture of an IG window unit, first, a glass substrate is coated with a low-E coating. The low-E coating is typically a multi-layer coating which includes at least one IR reflecting layer of a material such as silver that is sandwiched between at least a pair of dielectric layers. The coating is typically applied via sputtering or the like. After the coating is applied to the glass substrate, the coated sheet is dusted with Lucor powder for purposes of protection. As is known in the art, the Lucor powder helps separate the coated sheets from one another during shipment to an IG unit fabricator, because during shipment a plurality of coated sheets are typically wrapped in a single rack. In particular, the powder is provided in order to reduce the likelihood of damage (scratching) occurring during shipment of the coated sheets.

Once the dusted coated sheets arrive at the IG unit fabricator, the fabricator typically stores the coated sheets in a rack or on a pallet. When the sheets are ready to be used, the coated sheets are each cut into smaller piece(s) and edge seamed as known in the art. Following cutting and edge seaming, the coated sheets are washed at a washing station using water and optionally soap of some sort. Following washing, a post-wash handling period typically occurs where the coated sheet is handled by operators or the like some of which tend to wear gloves. Thereafter, if required, the coated sheets are placed in a furnace and are thermally tempered therein. Thermal tempering at the fabricator typically involves heat treatment of a coated sheet using furnace temperature(s) of at least 580 degrees C, more preferably of at least about 600 degrees C and still more preferably of at least 620 degrees C. An example heat treating furnace temperature is from 600 to 700 degrees C. This tempering and/or bending can take place for a period of at least 4 minutes, at least 5 minutes, or more in different situations.

Unfortunately, the process described above is undesirable in that the coated glass sheets are often damaged during the process. Coated glass sheets are sometimes less durable while in the annealed state (i.e., prior to tempering). Thus, the glass sheets provided with low-E coatings thereon are highly susceptible to damage during each of these process steps. The coated side of the coated sheets are the most vulnerable to damage (e.g., scratching) in this regard.

For example, coated sheets are often scratched due to one or more of: (a) rubbing up against other sheets or the like during shipment; (b) pliers used by glass handlers during and/or proximate cutting or edge seaming steps; (c) abrasion caused by gloves worn by glass handlers; (d) brushes during washing step; and (e) other types of rubbing/abrasion caused during any step at fabricator premises. Additionally, corrosion is also a significant cause of damage and is often caused by high humidity conditions, acid rain, and/or other materials which tend to collect on the coated articles during transport, storage and/or handling.

While the aforesaid types of damage often occur prior to heat treatment (e.g., tempering), the tempering of the coated sheets typically magnifies such damage. For example, a minor bit of corrosion which was caused pre-tempering can lead to a significant blemish upon heat treatment which causes the coated sheet to be scrapped. The same is true for scratch damage because scratches in a coating allow oxidation to occur deep within the coating and possibly at the silver layer(s) during heat treatment (e.g., tempering) since heat treatment is typically conducted in an oxygen-inclusive atmosphere. Thus, the damage to a coated article often tends to be worse following heat treatment. Accordingly, it can be seen that yields appreciably suffer due to pre-HT damage that tends to occur to coated glass sheets.

In view of the above, it can be seen that there exists a need in the art to better protect coated glass sheets in the processing stages especially prior to any heat treatment (e.g., prior to tempering). In particular, increased protection against mechanical abrasion and environmental damage is needed. Over the years, numerous attempts have been made in this regard.

The dusting of coated sheets with Lucor powder separator is carried out in an attempt to better protect coated glass sheets in the processing stages prior to heat treatment. Unfortunately, Lucor powder provides no protection against corrosion damage, and also is not particularly effective in protecting against scratch damage due to the use of pliers, brushes, gloves and the like.

Encapsulating of racks during shipment has also been tried. However, encapsulating racks is labor intensive and has proven only partially effective during shipment. Moreover, it provides no practical protection during cutting, edge seaming, washing, and post-wash handling processing.

Special processing requirements are also undesirable since this severely limits the number of fabricators capable of performing such processing. Moreover, this significantly adds to the cost of fabrication and is highly undesirable in this regard.

Sacrificial lites (or glazings) have been used during shipment in an attempt to solve the aforesaid problems. In particular, glass sheets are run through the coater with the coater turned off and are subsequently loaded onto the shipping rack at an end thereof with the rack thereafter being wrapped for protection. Because the sacrificial lite is located at the end of the rack, some marginal protection to the other lites in the rack is afforded during shipment. The sacrificial lites are discarded at the fabricator. However, this technique is undesirable in that it requires coater downtime, wasting of glass, and wasting of shipping volume/space/weight, all of which lead to significantly cost increases.

U.S. Patent No. 6,682,773 to Medwick discloses a technique where a water-soluble temporary protective layer is applied to a coated glass sheet via a liquid solution. In particular, the protective layer is the reaction product of an aqueous coating composition containing a polyvinyl alcohol polymer which is then cured and may thereafter be removed by washing in water. Unfortunately, the technique of the '773 Patent is highly undesirable in that: (a) the coating is applied in liquid form and thus has to be cured using a sophisticated heat drying process which takes up valuable time and space; and (b) the coating is typically water soluble and is removed by washing thereby leaving the coated sheet exposed to potential damage during post-wash handling and/or processing. Thus, it can be seen that the technique of the '773 Patent is highly undesirable.

U.S. Patent No. 6,461,731 discloses a protective diamond-like carbon (DLC) layer provided over a low-E coating. However, the DLC layer of the '731 Patent cannot practically and reasonably be removed prior to tempering.

U.S. Patent No. 4,710,426 discloses a protective polymeric layer on a coated sheet. However, the isocyanate used in the '426 system prevents the protective polymeric layer from being practically removed in a reasonable manner.

International Patent Application No. WO2005100276 discloses a temporary protective layer which can easily be applied in solid form (i.e., as opposed to liquid form) so that no significant curing is needed, which is not water soluble so that it protects the low-E coated glass substrate during washing step(s) and which can be easily removed by simply peeling it off just prior to heat treatment. The protective layer includes a polyethylene film covered with a pressure sensitive adhesive comprising an acrylic based material. The exemplary protective film disclosed in the '276 patent application is the Nitto Denko 5057A film tape. However the films envisaged in said document do not exist in larger width than 2,85 m, whereas standard width of glass sheets is 3,21 m.

International Patent Application No. WO2008153622 has therefore proposed to protect large glass sheets with two distinct protective layers of the type taught in the '276 patent application, either juxtaposed one beside the other or with an overlap between them, as shown by our example 1 not in accordance with the invention hereinbelow. However such juxtaposition or overlap has revealed to be insufficient to guarantee an adequate protection to the low-E coated glass substrate, especially in the proximity of the joint between them. The process according to '622 patent application consequently necessitates to apply a protective coating in liquid form to reduce the gaps formed between the low-E coating and the protective layer(s) and/or between the protective layers. But this solution requires additional steps and make the process more complex, slower and more costly.

Commercially available CARDINAL IG PRESERVE protective film also is not available in 3,21 m width and necessitates the partial overlap of two films to cover a full-width of standard 3,21 m wide glass sheets.

In view of the above, it can be seen that there exists a need in the art to better protect coated glass sheets in the transport and processing stages prior to an optional heat treatment (e.g., tempering) and prior its use in a final product, in a more efficient manner such that a protective layer can be easily positioned on 3,21 m width glass sheets, then removed in a processing step prior to tempering and/or final use. In particular, increased protection against mechanical abrasion and environmental damage is needed in steps leading up to heat treatment or final use.

### BRIEF SUMMARY OF EXAMPLE EMBODIMENTS OF THE INVENTION

In certain embodiments of this invention, a temporary protective coating is provided on a glass substrate that is coated with a multi-layer low-E coating. The temporary protective coating includes one or more layers and is located on the glass substrate over at least the low-E coating.

In certain example embodiments, the temporary protective coating is designed such that it can be applied over a low-E coating in an efficient manner without the need for any sort of lengthy curing procedure. In this regard, the temporary protective coating is preferably applied in solid form (i.e., as opposed to liquid form) so that no significant curing is needed. In addition, in certain example embodiments of this invention, the temporary protective coating has a width of more than 2,85 m, preferably of at least 3 m or at least 3,10 m, more preferably of at least 3,20 m, such that it can cover at once the full width of a 3,21 wide coated glass sheet; its width may be at most 3,25 m. Moreover, in certain example embodiments of this invention, the temporary protective coating is designed such that it can be easily removed by simply peeling it off just prior to heat treatment or final use. In certain example embodiments, the temporary protective coating is designed such that it is not water soluble so that it remains on and protects the low-E coated glass substrate during washing step(s) and thereafter during at least some post-wash handling step(s).

In certain example embodiments of this invention, there is provided a method of making an insulating glass (IG) window unit, the method comprising: sputtering a multi-layered low-E coating onto a glass substrate, wherein the low-E coating comprises at least one infrared (IR) reflecting layer comprising silver sandwiched between at least first and second dielectric layers; adhering a flexible protective sheet in non-liquid form to a top surface of the low-E coating via an adhesive layer to form a protected coated article; following adhering of the protective sheet to the top surface of the low-E coating, shipping the protected coated article to a fabricator of IG window units; the fabricator cutting the protected coated article into an appropriate shape and size with the protective sheet thereon, edge seaming the protected coated article with the protective sheet thereon, and washing the protected coated article with the protective sheet thereon, so that following the cutting, edge seaming and washing the protective sheet remains adhered to the top surface of the low-E coating via the adhesive layer; following said cutting, edge seaming and washing, peeling the protective sheet off of the top surface of the low-E coating to form an unprotected coated article; after peeling the protective sheet off of the top surface of the low-E coating, optionally inserting the unprotected coated article into a furnace and thermally tempering the unprotected coated article including the glass substrate and low-E coating in the furnace; and after said optional tempering, coupling the (tempered) coated article including the glass substrate and low-E coating to another glass substrate to form an IG window unit.

In other example embodiments of this invention, there is provided a method of making a window unit, the method comprising: sputtering a multi-layered low-E coating onto a glass substrate, wherein the low-E coating comprises at least one infrared (IR) reflecting layer sandwiched between at least first and second dielectric layers; adhering a protective sheet in non-liquid form to a top surface the low-E coating to form a protected coated article; following adhering of the protective sheet to the top surface of the low-E coating, cutting the protected coated article into at least one shape and size with the protective sheet thereon, and thereafter washing the protected coated article with the protective sheet thereon, so that following the cutting and washing the protective sheet remains adhered to the top surface of the low-E coating; following said cutting and washing, peeling the protective sheet off of the top surface of the low-E coating to form an unprotected coated article; after peeling the protective sheet off of the top surface of the low-E coating, optionally inserting the unprotected coated article into a furnace and heat treating the unprotected coated article including the glass substrate and low-E coating in the furnace; and after said optional tempering, using the (tempered) coated article in making a window unit.

### DETAILED DESCRIPTION OF EXAMPLE EMBODIMENTS OF THE INVENTION

A temporary protective coating, having one or more layers, is provided on a glass substrate that is coated with a multi-layer low-E coating in certain embodiments of this invention. The temporary protective coating is typically provided on the substrate over a multi-layer low-E coating, where the low-E coating typically includes at least one infrared (IR) reflecting layer of a material comprising silver or the like. In certain example instances, the IR reflecting layer(s) may be sandwiched between at least a pair of dielectric layers.

In certain example embodiments, the temporary protective coating is designed such that it can be applied over a low-E coating in an efficient manner without the need for any sort of lengthy curing procedure (e.g., without the need for convective air drying, radiant heat drying, convective heat drying, heat drying, vacuum drying, and/or radiation curing such as UV, IR or RF curing). In this regard, the temporary protective coating is preferably applied in solid sheet and/or tape form (i.e., as opposed to liquid form) so that no true curing is needed. For example, the temporary protective coating can be easily applied via lamination or the like in an efficient and reasonable manner.

In certain example embodiments of this invention, the temporary protective coating is designed such that it can be easily removed by simply peeling it off just prior to heat treatment (e.g., just prior to tempering) or just prior to use in a final product (e.g., just prior to assembly into a window unit). It may be peeled off by hand (by an operator), or alternatively may be peeled off via a robot in certain other embodiments of this invention. Thus, certain example embodiments of this invention allow fabricators to more aggressively handle and/or process coated glass sheets prior to heat treatment or use, without running a significant risk of damage. This permits yields to be increased, and costs cut.

It has been found that the use of the protective layer discussed herein allows of yields to be improved by at least 50%, and also allows significant post-HT defects to be reduced by at least 50%, more preferably by at least 75% (e.g., compared to a situation where merely Lucor spacer powder is used as discussed above).

Moreover, surprisingly and unexpectedly, it has been found that the protective layer provides added durability/protection even after it has been removed. It is believed that this may be due to residual material from the adhesive layer which may remain on the coating following peeling off of the protective layer. This residual material from the adhesive layer, left on the coating for durability purposes after removal of the protective layer and most of the adhesive layer, is then burned off during heat treatment so that it does not create optical problems or the like. This residual added durability/protection is highly advantageous in processing/handling which occurs between the time of protective layer removal and heat treatment. This unexpected result represents a significant advantage in the art.

In certain example embodiments, the temporary protective coating is not water soluble so that it remains on and protects the low-E coated glass substrate during washing step(s) and thereafter during at least some post-wash handling step(s). Thus, the coated sheet is not highly susceptible to damage (e.g., scratching and/or corrosion) during washing or during certain post-wash handling procedures.

An intermediate-stage coated article according to an example embodiment of this invention includes a glass substrate which supports a low-E coating. Provided on the substrate and over the low-E coating is a protective film or coating comprising a protective layer that is adhered to the low-E coating via an adhesive layer. Such coated article is referred to as an "intermediate-stage" coated article because it typically exists during only a particular stage of the manufacturing process before the final product is completed and sold.

Low-E coating may be any suitable type of low-E or solar management coating in different embodiments of this invention. For example, and without limitation, single silver, double silver or triple silver coating stacks, or any of the coatings in any of the following WO9925661, WO2005012200, WO2006122900, WO2007138097, WO2011147875, WO2011147864, WO2013079400, WO2014191472, WO2014191474, WO2014191484, all of which are hereby incorporated herein by reference. In certain example embodiments, the top layer of the low-E coating is of or comprises silicon nitride which may or may not be doped with a metal such as Al and/or stainless steel.

The adhesive is a pressure sensitive adhesive (PSA) which is substantially free of acrylic based material, or preferably free of any acrylic based material. Adhesive provides a low level of adhesion of the protective layer to the top of the low-E coating in certain embodiments thereby permitting the protective layer and most if not all of the adhesive layer to be easily removed by peeling off when desired. As explained above, it has been surprisingly been found that the protective layer provides added durability/protection even after it has been removed. It is believed that this may be due to residual material from the adhesive layer which may remain on the coating following peeling off of the protective layer and at least part of layer. This residual material from the adhesive layer, left on the coating for durability purposes after removal of the protective layer and most of the adhesive layer, is then burned off during heat treatment (e.g., tempering) so that it does not create optical problems or the like.

The adhesive layer of the protective film comprises an adhesive composition which may comprise at least one material selected from the group of rubber (natural or synthetic or a mixture of natural and synthetic), polyisobutylene, ethylene-vinyl acetate (EVA) and polyethylene (PE). It may additionally comprise tackifying resin(s) and/or plastifying agent(s).

Suitable exemplary adhesive compositions are disclosed in WO02/094963 hereby incorporated herein by reference: for example a composition which comprises:
(A) at least one compound selected from the group consisting of a low density free-radical polyethylene; a copolymer of ethylene and a C3-C8 olefinic monomer; an ethylene/propylene copolymer; an ethylene/propylene/diene; an ethylene/vinyl acetate copolymer; a copolymer of ethylene and an acrylic derivative; a styrene/ethylene-butylene/styrene copolymer; a styrene/butadiene/styrene copolymer; a styrene/isoprene/styrene copolymer; an ethylene/ styrene copolymer; a tackifying resin; and mixtures thereof; and
(B) polybut-1-ene or a mixture of polybut-1-ene and a block copolymer containing at least two poly(monovinylic aromatic hydrocarbon) blocks and at least one hydrogenated poly(conjugated diene) block.

Other examples of suitable adhesive compositions may be found e.g. in EP608175, hereby incorporated herein by reference: for example a composition which comprises:
(i) either a mixture of at least one polyolefin selected from free-radical polyethylenes with density between 0.910 and 0.940; linear polyethylenes, EVA and EDA with a density of between 0.890 and 0.940 and a comonomer content of less than 25% by weight; and of EPM with a density of between 0.860 and 0.900 and a propylene content of between 25 and 60% by weight, and at least one tackifying resin,
(li) or a mixture of at least one polyolefin selected from linear polyethylenes and EVA with a density of between 0.890 and 0.940 and a comonomer content of less than 25% by weight; and of at least one EPM with a propylene content of between 25 and 60% by weight and a density between 0.860 and 0.900.

The protective layer, which may also act as the supporting sheet of the protective film, may be polyolefin-based and may be of or comprise polyethylene in certain example embodiments of this invention. Other suitable materials may also be used in certain instances (e.g. polypropylene, copolymer of ethylene-propylene). In certain example embodiments of this invention, the protective layer has a visible transmission of less than 70% (measured regarding all visible wavelengths of light), more preferably less than 60%, and most preferably less than 50% (thus, the optics of the coated article are undesirable when the protective layer is thereon). In certain example instances, the protective layer may be otherwise colored. The coloration of the protective layer is advantageous in that it allows edges of the layer to be clearly seen by operators such as peelers, and also permits handlers to be able to easily determine whether or not the protective layer is still on the coated substrate. This is helpful in preventing coated articles with the layer thereon from being placed into the heat treating furnace before the layer has been removed by peeling or the like. In certain example embodiments of this invention, the protective layer is from about 0.02-0.08 mm thick, more preferably about 0.05 mm thick, and is in solid flexible sheet form so as to be capable of being stored on a roll or the like before application over the low-E coating. In preferred example embodiments of this invention, suitable protective films according to the invention are co-extruded films for temporary surface protection, also called in the art co-extruded temporary protection films (TPF), for example films commercialized by NOVACEL under the commercial references 9872, 9380, 9070, or 9078.

The following description illustrates certain steps carried out according to an example embodiment of this invention during the manufacture of an IG window unit. First, a glass substrate of 3,21 m width is coated with a low-E coating. Example low-E coatings which may be used are discussed above. The low-E coating is typically a multi-layer coating which includes at least one IR reflecting layer of a material such as silver that is sandwiched between at least a pair of dielectric layers. The coating is typically applied via sputtering or the like. After the coating is applied to the glass substrate, the sheet-like protective layer is adhered to the top of the low-E coating via pressure sensitive adhesive layer to form the coated sheet which we called "intermediate-stage" coated article. In certain example embodiments of this invention, the protective layer is wider than 3,10 m, e.g. around 3,20 m width, and may be stored on a roll. In such instances, the sheet material fed from the roll may be brought into a nip between a biasing roller and the coated article with the low-E coating thereon. In the nip, the roller presses the protective sheet layer downward toward the top of the low-E coating thereby adhering the layer to the top of the low-E coating via the adhesive layer. In certain example embodiments of this invention, the coating is applied at a coated article surface temperature of from 15 to 50 °C, more preferably from about 30 to 50 °C, and most preferably from about 30 to 45 °C, and sometime at temperatures above 37 °C. This is because the coated sheet is at an elevated temperature due to the coater used to apply the low-E coating on the substrate. Alternatively, a bench-top laminator may be used to laminate the protective layer to the low-E coating via the adhesive layer using typical lamination technology.

After the protective layer has been applied over the low-E coating, the coated article is positioned in a rack along with a plurality of other such articles, and the rack is thereafter shipped from the coater to the fabricator in the rack. Optionally, in certain example embodiments of this invention, it is possible to coat or dust the coated articles with Lucor powder for purposes of protection even after the protective layer has been applied. The Lucor spacer powder may help separate the coated sheets from one another during shipment to an IG unit fabricator.

Once the coated sheets arrive at the IG unit fabricator, the fabricator typically stores the coated sheets in a rack or on a pallet with the protective layer thereon. When the sheets are ready to be used, the coated sheets are each cut into smaller piece(s) and edge seamed with the protective film still thereon. Following cutting and edge seaming, the coated sheets are washed at a washing station using water and optionally soap of some sort, again with the protective film still thereon. Typically, the protective layer is not water soluble, so that it does not come off during the washing step. This is advantageous in that it permits the coated sheet to be protected from abrasion from brushes used during the washing, and also permits the protective layer to continue to protect the coated sheet during post-wash handling. Following washing, such a post-wash handling period typically occurs where the coated sheet is handled by operators or the like some of which tend to wear gloves.

Just before the coated article is to be placed in a heat treating furnace (e.g., thermal tempering and/or bending furnace) or used in a final product, the protective layer and at least part of adhesive layer are peeled off of the coated glass substrate by an operator or robot thereby leaving the low-E coating on the glass substrate. As explained above, it is possible for residual portions of the adhesive layer to remain on the substrate over the low-E coating even after the peeling off step. As mentioned above, such residual portions of the adhesive layer may help protect the coated article just before and during introduction of the coated article into the furnace. Thereafter and optionally, once the coated article comprising the glass substrate with low-E coating thereon is placed in the furnace, the coated article is heat treated sufficiently to thermally temper and/or heat bend the coated article. Thermal tempering at a fabricator typically involves heat treatment of a coated sheet using furnace temperature(s) of at least 580 degrees C, more preferably of at least about 600 degrees C and still more preferably of at least 620 degrees C. This tempering can take place for a period of at least 4 minutes, at least 5 minutes, or more in different situations. As mentioned above, during such heat treatment, any residual portion of the adhesive layer is burned off.

Alternatively, it is possible, in certain embodiments of this invention, that the protective layer (and at least part of adhesive) is peeled off just prior to introduction of the coated sheet into a tempering or bending washer at the fabricator.

The coated article, including the substrate and the low-E coating in monolithic form, may in certain example embodiments have a visible transmission of at least 70% after removal of the protective film, and/or following heat treatment.

After having been optionally heat treated, the coated sheet is coupled to another glass or plastic sheet via at least one spacer and/or sealant to form an IG window unit. Typically, an IG window unit may include two spaced apart substrates. An example IG window unit may include the coated glass substrate including heat-treated low-E coated glass substrate according to the present invention coupled to another glass substrate via spacer(s), sealant(s) or the like with a gap being defined therebetween. This gap between the substrates in IG unit embodiments may in certain instances be filled with a gas such as argon (Ar), or alternatively may be filled with air. An example IG unit may comprise a pair of spaced apart clear glass substrates each about 4 mm thick, one of which is coated with a coating herein in certain example instances, where the gap between the substrates may be from about 5 to 30 mm, more preferably from about 10 to 20 mm, and most preferably about 16 mm. In certain example IG unit embodiments of this invention, the coating is designed such that the resulting IG unit (e.g., with, for reference purposes, a pair of 4 mm clear glass substrates spaced apart by 16 mm with Ar gas in the gap) has a U-value of no greater than 1.25 W/(m²K), more preferably no greater than 1.20 W/(m²K), even more preferably no greater than 1.15 W/(m²K), and most preferably no greater than 1.10 W/(m²K). The IG window unit may have a visible transmission of from 50-80% in certain example embodiments of this invention, more preferably from 60-75%.

In view of the above, it can be seen that the protective layer, and optionally the adhesive, serve to protect the coated sheet from damage (e.g., scratching, corrosion and the like) during shipping, unloading, cutting, edge seaming and grinding, robotic handling and human handling. An example benefit is significantly higher fabrication yields for the product.

### EXAMPLES

For purposes of example only, and without limitation, two examples were made and tested.

In example 1, not in accordance with the invention, a low-E coating was sputtered onto a glass substrate. The materials used for the low-E coating are listed below, in order from the glass substrate outwardly, and the approximate thicknesses are given:

| Glass | |
|---|---|
| Mixed oxide of zinc and tin | 420Å |
| Zinc oxide | |
| Silver | 100Å |
| Titanium | 60Å |
| Aluminum-doped zinc oxide | 820Å |
| Mixed oxide of zinc and tin | |
| Zinc oxide | |
| Silver | 125Å |
| Titanium | 60Å |
| Aluminum-doped zinc oxide | 270Å |
| Mixed oxide of zinc and tin | |
| Titanium nitride | 35Å |

Further details, advantages, and characteristics of this low-E coating, may be found in WO2006048463, the disclosure of which is hereby incorporated herein by reference.

Following sputtering of said coating onto the glass substrate, a polyethylene protective layer was adhered to the top of the low-E coating via acrylic based adhesive layer. In this regard, SPV CGP-572 tape from Nitto Denko was used. Since this tape is unavailable in widths greater than 2,85 m, two tapes were used to cover the whole width of the glass substrate, with an overlap of between 0,5 and 1 cm.

A sample including the overlap region was then subjected to the Salt Fog test, to assess the corrosion protection properties of the tape. This test consists in subjecting the sample to the action, in a chamber maintained at 35°C, of a salt fog formed by spraying an aqueous solution containing 50 g/l sodium chloride (full details of this test are set out in International Standard ISO 9227-1990). After an exposure time of 10 days, the low-E coating was visibly corroded in the surrounding of the overlap, which is unacceptable.

In example 2, according to the invention, a low-E coating was sputtered onto a glass substrate. The materials used for the low-E coating are listed below, in order from the glass substrate outwardly, and the approximate thicknesses are given:

| Glass | |
|---|---|
| Mixed oxide of zinc and tin | 25-35 nm |
| Zinc oxide | 3-8 nm |
| Silver | 10-11 nm |
| Aluminum-doped zinc oxide | 2-5 nm |
| Mixed oxide of zinc and tin | 25-30 nm |
| Silicon nitride | 35 nm |
| Mixed oxide of zinc and tin | 12-16 nm |
| Mixed oxide of titanium and zirconium | 3-5 nm |
| Zinc oxide | 3-8 nm |
| Silver | 14 nm |
| Aluminum-doped zinc oxide | 2-5 nm |
| Mixed oxide of zinc and tin | 10-15 nm |
| Silicon nitride | 20 nm |
| Mixed oxide of titanium and zirconium | 1-5 nm |

Further details, advantages, and characteristics of this low-E coating, may be found in WO2014191474, the disclosure of which is hereby incorporated herein by reference..

Following sputtering of said coating onto the glass substrate, a co-extruded film for temporary surface protection from the company Novacel, whose adhesive is free of acrylic, was adhered to the top of the low-E coating. Since this film is available in a width of 3,20 m, a single width of tape was enough to cover the whole width of the glass substrate, and no overlap was needed.

Various protected samples were then subjected to various mechanical and chemical tests to assess the mechanical resistance and corrosion protection properties of the film.

The Dry Brush Test (DBT) is used to evaluate a layer's resistance to erosion as a result of friction. The details of this test are given in ASTM Standard D 2486 - 00. The following parameters were used: normalized nylon brush (individual bristle diameter of 0.3 mm and bristles arranged in groups with a diameter of 4 mm); total weight of the brush and the holder was 454g. The samples were subjected to the method of test A for 1000 cycles, then, after removal of the temporary protective film, the low-E coating degradation was observed. The sample which had the temporary protective film during testing exhibited no visible degradation of the low-E coating, whereas a reference sample which had no temporary protective film during testing showed degradation visible at the naked eye. After tempering, no visible degradation of the low-E coating was revealed by the heat treatment on the sample which had the temporary protective film, whereas the degradation already visible on the reference sample before heat treatment was even more visible after heat treatment.

The results of the chemical tests applied to samples of example 2 are summarised in the table below. The observations were made after removal of the temporary protective film and led to a quotation from 0 to 5, with 5 being not degraded and 1 being very much degraded.

| | Example 2 (which had the temporary protective film during testing) | Reference (which had no temporary protective film during testing) |
|---|---|---|
| Climatic Chamber 3 days | 5 | 2-2.5 (pitting) |
| Climatic Chamber 6 days | 3 | 1 (pitting) |
| Neutral Salt Spray Test 2 days | 5 | 2.5 |
| Neutral Salt Spray Test 4 days | 5 | 1 |
| Cleveland 3 days | 5 | 3.5-4 |
| Cleveland 6 days | 4 | 1.5 |

In the Climatic Chamber test the samples were placed in a chamber filled with an atmosphere of H₂O and subjected to temperature cycles each of 2 hours, during which the temperature varies from 45°C to 55°C returning to 45°C. The coating degradation is caused by successive condensation-evaporation processes occurring on it.

The Neutral Salt Spray test, in accordance with standard EN 1096-2012, consists in subjecting the coated glass to a salt spray formed by distilled water with dissolved NaCl. Test conditions are 35 +/-2 °C.

The Cleveland test consists in subjecting the coated glass to a water-saturated atmosphere at constant temperature (heating the demineralized water on the floor, keeping a temperature of the water of 50 +/-2 °C). Condensation is continually forming on the samples and this condensation causes surface degradation.

Results were compared to a reference sample which had no temporary protective film during testing. This has shown that a protected coated article may be at least 3 times more resistant (more preferably at least 5 times more resistant) to scratching via an abrasion test and/or to chemical attacks than is a comparative unprotected coated article including the glass substrate and low-E coating.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A method of making a window unit, the method comprising:
sputtering a multi-layered low-E coating onto a glass substrate of more than 2,85 m width, wherein the low-E coating comprises at least one infrared (IR) reflecting layer comprising silver sandwiched between at least first and second dielectric layers;
adhering a flexible protective sheet in non-liquid form to a top surface of the low-E coating via an adhesive layer to form a protected coated article, said sheet having a width greater than 2,85 m;
following adhering of the protective sheet to the top surface of the low-E coating, cutting the protected coated article into at least one shape and size with the protective sheet thereon, edge seaming the protected coated article with the protective sheet thereon, and thereafter washing the protected coated article with the protective sheet thereon, so that following the cutting and washing the protective sheet remains adhered to the top surface of the low-E coating via the adhesive layer;
following said cutting and washing, peeling the protective sheet off of the top surface of the low-E coating to form an unprotected coated article;
after peeling the protective sheet off of the top surface of the low-E coating, optionally inserting the unprotected coated article into a furnace and heat treating the unprotected coated article including the glass substrate and low-E coating in the furnace; and
after said optional heat treatment, using the coated article in making a window unit.

2. The method of claim 1, wherein the flexible protective sheet has a width of at least 3 m.

3. The method of claim 1 or claim 2, wherein the flexible protective sheet has a width substantially equal to the glass substrate width.

4. The method any of the preceding claims, wherein the flexible protective sheet and the adhesive layer are provided as a co-extruded film for temporary surface protection (TPF).

5. The method of any of the preceding claims, wherein the adhesive layer is substantially free of acrylic based material, preferably free of any acrylic based material.

6. The method of claim 5, wherein the adhesive layer comprises at least one material selected from the group of rubber, polyisobutylene, ethylene-vinyl acetate (EVA) and polyethylene (PE).

7. The method of any of the preceding claims, wherein the protective sheet is polyolefin-based.

8. The method of any of the preceding claims, wherein the protective sheet comprises at least one material selected from the group of polyethylene, polypropylene and copolymer of ethylene-propylene.

9. The method of any of the preceding claims, wherein the protective sheet is colored.

10. The method of any of the preceding claims, wherein an uppermost layer of the low-E coating comprises silicon nitride, wherein the protective sheet is adhered to the layer comprising silicon nitride via the adhesive layer.
